# EUROPEAN PATENT SPECIFICATION

(11) **EP 2 833 724 B1**
(45) Date of publication and mention of the grant of the patent: **18.09.2019**
(21) Application number: 13724626.0
(22) Date of filing: 03.04.2013
(51) Int. Cl.: A23C 9/152, A23C 9/154, A23C 9/156

(54) **SHELF-STABLE ACIDIFIED DAIRY OR DAIRY-LIKE PRODUCTS AND METHODS FOR MAKING SAM**
LAGERSTABILE ANGESÄUERTE MILCH- ODER MILCHARTIGE PRODUKTE UND HERSTELLUNGSVERFAHREN DAFÜR
PRODUITS LAITIERS OU DU TYPE LAITIER ACIDIFIÉS DE LONGUE CONSERVATION ET LEURS PROCÉDÉS DE FABRICATION

(30) Priority: 04.04.2012 US 201261620075 P; 25.04.2012 US 201261638112 P
(43) Date of publication of application: 11.02.2015
(73) Proprietor: Société des Produits Nestlé S.A., 1800 Vevey (CH)
(72) Inventor: GRAF, Eric Edward, Holton, Michigan 49413 (US); SAVANT, Vivek Dilip, Norton Shores, Michigan 49444 (US)
(74) Representative: Rupp, Christian
(86) International application number: PCT/IB2013/052669
(87) International publication number: WO 2013/150468

(56) References cited:
- WO-A1-2011/095477
- US-A1- 2007 082 095
- US-A1- 2008 008 814
- US-A1- 2009 061 046

## Description

### BACKGROUND

The present disclosure relates generally to health and nutrition. More specifically, the present disclosure relates to shelf-stable acidified dairy and/or dairy-like products having a five-component stabilizer system. Methods for making such products are also provided.

There are many types of nutritional compositions currently on the market. Nutritional compositions can be targeted toward certain populations or consumer groups, for example, young, elderly, athletic, etc., based on the specific foods and/or other ingredients in the nutritional composition. In addition to nutritional requirements, tastes and textures of consumable products are also important to ensure consumer enjoyment of the product. For example, it is known that protein may be added to consumable products to create a thicker body and to enhance texture and mouthfeel of the product. However, adding extra amounts of protein may not always provide optimal organoleptic properties, or may not provide proper nutritional requirements for certain consumers. Accordingly, if enhanced body and texture are desired for a consumable product, but it is not desirable to use increased amounts of protein to achieve such properties, it may be necessary to find other means for creating enhanced body and texture for the product.

One goal of nutritional support, therefore, is to provide compositions having enhanced body, texture and mouth-feel without the use of excessive amounts of protein. Another goal of nutritional support is to provide manufacturing methods for producing shelf-stable acidified dairy and/or dairy-like compositions.

WO 2011/095477 A1 describes a method of manufacturing sour milk preparations with the use of a sialidase enzyme.

### SUMMARY

Shelf-stable acidified dairy and/or dairy-like products are provided. Methods for making the shelf-stable acidified dairy or dairy-like products are also provided. In an embodiment, a shelf-stable acidified dairy or dairy-like product is provided and includes a dairy and/or dairy-like component, and a stabilizer system comprising a combination of at least carrageenan, pectin, maltodextrin, tapioca and modified corn starches.

In an embodiment, the pectin is included in the composition in an amount ranging from 0.2% to 1.5% w/w, or from 0.3% to 1.2% w/w of the composition, or from 0.3% to 0.9% w/w of the composition, or from 0.4% to 0.6% w/w of the composition. In an embodiment, the pectin is high methoxyl pectin.

In an embodiment, the carrageenan is included in the composition in an amount ranging from 0.2% to 2.0% w/w of the composition, or from 0.2% to 1.5% w/w of the composition, or from 0.2% to 1.0% w/w of the composition, or from 0.3% to 0.5% w/w of the composition. In an embodiment, the carrageenan is iota carrageenan.

In an embodiment, the tapioca is included in the composition in an amount ranging from 1.0% to 4.0% w/w of the composition, or from 1.0% to 3.5% w/w of the composition, or from 1.25% to 3.0% w/w of the composition, or from 1.25% to 2.5% w/w of the composition, or from 1.5% to 2.0% w/w of the composition. In an embodiment, the tapioca is native tapioca.

In an embodiment, the modified corn starch is included in the composition in an amount ranging from 1.0% to 4% w/w of the composition, or from 1.0% to 3.5% w/w of the composition, or from 1.25% to 3.0% w/w of the composition, or from 1.25% to 2.5% w/w of the composition, or from 1.5% to 2.0% w/w of the composition.

In an embodiment, the maltodextrin is included in the composition in an amount ranging from 1.0% to 5.0% w/w of the composition, or from 1.25% to 4.5% w/w of the composition, or from 1.5% to 4.0% w/w of the composition, or from 1.75% to 3.5% w/w of the composition, or from 1.75% to 3.25% w/w of the composition, or from 2.0% to 3.0 % w/w of the composition.

In an embodiment, the composition is not fermented.

In an embodiment, the stabilizer increases a thickness of the composition.

In an embodiment, the stabilizer provides body to the composition.

In an embodiment, the stabilizer improves a mouth-feel of the composition.

In an embodiment, the composition is a snack. Alternatively, the composition may be part of a meal.

In an embodiment, the composition includes a dairy ingredient selected from the group consisting of milk, cream, yogurt, cheese, sour cream, buttermilk, kefir, or combinations thereof.

In an embodiment, the composition includes a dairy-like ingredient selected from the group consisting of nut milk, almond milk, soy milk, coconut milk, rice milk, or combinations thereof.

In an embodiment, the composition further includes an ingredient selected from the group consisting of a source of carbohydrate, a source of fat, canola oil, flaxseed oil, a source of omega-3 fatty acids, a source of protein, a source of fiber, a flavor, a color, a fruit puree, a vegetable puree, vitamins, minerals, DHA, EPA, antioxidants, amino acids, fish oil, phytochemicals, probiotics, prebiotics, synbiotics, non-replicating microorganism, liquid whole grain, or combinations thereof.

In an embodiment, the composition includes at least one amino acid. The amino acid may be selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

In an embodiment, the composition includes an antioxidant. The antioxidant may be selected from the group consisting of astaxanthin, carotenoids, coenzyme Q10 ("CoQ10"), flavonoids, glutathione, Goji (wolfberry), hesperidin, lactowolfberry, lignan, lutein, lycopene, polyphenols, selenium, vitamin A, vitamin C, vitamin E, zeaxanthin, or combinations thereof.

In an embodiment, the composition includes a source of omega-3 fatty acids. The source of omega-3 fatty acids may be selected from the group consisting of fish oil, krill, plant sources containing omega-3 fatty acids, flaxseed oil, canola oil, walnut, algae, or combinations thereof. The omega-3 fatty acids may be selected from the group consisting of α-linolenic acid ("ALA"), docosahexaenoic acid ("DHA"), eicosapentaenoic acid ("EPA"), or combinations thereof.

In an embodiment, the composition includes a source of protein selected from the group consisting of dairy based proteins, plant based proteins, animal based proteins, artificial proteins, or combinations thereof. The dairy based proteins may be selected from the group consisting of casein, caseinates, casein hydrolysate, whey, whey hydrolysates, whey concentrates, whey isolates, milk protein concentrate, milk protein isolate, or combinations thereof. The plant based proteins may be selected from the group consisting of soy protein, pea protein, canola protein, wheat and fractionated wheat proteins, corn proteins, zein proteins, rice proteins, oat proteins, potato proteins, peanut proteins, green pea powder, green bean powder, spirulina, proteins derived from vegetables, beans, buckwheat, lentils, pulses, single cell proteins, or combinations thereof.

In an embodiment, the composition includes at least one vitamin. The vitamin may be selected from the group consisting of vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, K1 and K2 (i.e., MK-4, MK-7), folic acid, biotin, or combinations thereof.

In an embodiment, the composition includes at least one mineral. The mineral may be selected from the group consisting of boron, calcium, chromium, copper, iodine, iron, magnesium, manganese, molybdenum, nickel, phosphorus, potassium, selenium, silicon, tin, vanadium, zinc, or combinations thereof.

In an embodiment, the composition includes at least one phytonutrient. The phytonutrient is selected from the group consisting of flavanoids, allied phenolic compounds, polyphenolic compounds, terpenoids, alkaloids, sulphur-containing compounds, or combinations thereof. The phytonutrient may be selected from the group consisting of carotenoids, plant sterols, quercetin, curcumin, limonin, or combinations thereof.

In an embodiment, the composition includes at least one prebiotic. The prebiotic is selected from the group consisting of acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, their hydrolysates, or combinations thereof.

In an embodiment, the composition includes at least one probiotic. The probiotic may be selected from the group consisting of Aerococcus, Aspergillus, Bacteroides, Bifidobacterium, Candida, Clostridium, Debaromyces, Enterococcus, Fusobacterium, Lactobacillus, Lactococcus, Leuconostoc, Melissococcus, Micrococcus, Mucor, Oenococcus, Pediococcus, Penicillium, Peptostrepococcus, Pichia, Propionibacterium, Pseudocatenulatum, Rhizopus, Saccharomyces, Staphylococcus, Streptococcus, Torulopsis, Weissella, or combinations thereof.

In an embodiment, the composition includes at least one non-replicating microorganism.

In an embodiment, the composition includes at least one synbiotic.

In an embodiment, the composition includes at least one liquid whole grain.

In an embodiment, the composition includes at least one fruit puree. The composition may also include at least one vegetable puree or a combination of a fruit/vegetable puree.

In an embodiment, the composition includes a nucleotide selected from the group consisting of a subunit of deoxyribonucleic acid, a subunit of ribonucleic acid, polymeric forms of DNA and RNA, or combinations thereof. The nucleotide may be an exogenous nucleotide.

In an embodiment, the composition has a pudding-like consistency.

In another embodiment, a method of preventing or treating obesity in an individual is provided. The method includes comprising administering to an individual a composition including a dairy and/or dairy-like component, and a stabilizer system comprising a combination of at least carrageenan, pectin, maltodextrin, tapioca and modified corn starches.

In another embodiment, a method of preventing or treating obesity in an infant or child is provided. The method includes comprising administering to an infant or child a composition including a dairy and/or dairy-like component, and a stabilizer system comprising a combination of at least carrageenan, pectin, maltodextrin, tapioca and modified corn starches.

In another embodiment, a method of providing a snack to an individual is provided. The method includes comprising administering to an individual a composition including a dairy and/or dairy-like component, and a stabilizer system comprising a combination of at least carrageenan, pectin, maltodextrin, tapioca and modified corn starches.

In another embodiment, a method of providing a snack to an infant or child is provided. The method includes comprising administering to an infant or child a composition including a dairy and/or dairy-like component, and a stabilizer system comprising a combination of at least carrageenan, pectin, maltodextrin, tapioca and modified corn starches.

In another embodiment, a method of providing a developmentally appropriate snack to an infant or child is provided. The method includes comprising administering to an infant or child a composition including a dairy and/or dairy-like component, and a stabilizer system comprising a combination of at least carrageenan, pectin, maltodextrin, tapioca and modified corn starches.

In another embodiment, a method of providing nutrition to an individual is provided. The method includes comprising administering to an individual a composition including a dairy and/or dairy-like component, and a stabilizer system comprising a combination of at least carrageenan, pectin, maltodextrin, tapioca and modified corn starches.

In another embodiment, a method of providing nutrition to an infant or child is provided. The method includes comprising administering to an infant or child a composition including a dairy and/or dairy-like component, and a stabilizer system comprising a combination of at least carrageenan, pectin, maltodextrin, tapioca and modified corn starches.

In yet another embodiment, a method for making a shelf stable, acidified, dairy and/or dairy-like composition is provided. The method includes mixing pectin and sugar with water and/or at least one milk, mixing in tapioca, modified corn starch, and maltodextrin, mixing in a puree, mixing in an acid, mixing in carrageenan to form a composition, homogenizing the composition 13790/3447 kPa (2000/500 psi), aseptically thermally processing the composition, cooling the composition, packaging the composition, and refrigerating the packaged composition.

In an embodiment, the tapioca is native tapioca.

In an embodiment, the pectin is high methoxyl pectin.

In an embodiment, the carrageenan is iota carrageenan.

In an embodiment, the puree is selected from the group consisting of fruit, vegetable, or combinations thereof.

In an embodiment, the composition is aseptically thermally processed at a temperature ranging from 82°C (180°F) to 99°c (210°F).

In an embodiment, the composition is cooled to a temperature that is less than about 100 °F.

In an embodiment, the composition is refrigerated for a period of time ranging from 6 hours to 10 hours.

In an embodiment, the method includes weighing the ingredients prior to mixing in starches.

In an embodiment, the method includes dry blending pectin and sugar in 1:1 ratio prior to mixing in starches.

In an embodiment, the method includes adding at least one omega-3 fatty acid prior to mixing in the acid.

In an embodiment, the method includes adding canola oil prior to mixing in the acid.

In an embodiment, the method includes adding flaxseed oil prior to mixing in the acid.

In an embodiment, the method includes adding fish oil prior to mixing in the acid.

In an embodiment, the method includes adding flavors prior to mixing in the acid.

In an embodiment, the method includes adding flavors after homogenizing the composition.

In an embodiment, the method includes adding colors prior to mixing in the acid.

In an embodiment, the method includes adding colors after homogenizing the composition.

In an embodiment, the acid is lactic acid.

In still yet another embodiment, a method for making a shelf stable, acidified, dairy and/or dairy-like composition is provided. The method includes mixing milk, water, pectin, sugar, at least one starch, maltodextrin, and at least one puree to form a mixture, acidifying the mixture, homogenizing the mixture with a dual-stage homogenizer, adding carrageenan to the mixture, aseptically thermally processing the mixture, and cooling the mixture.

In an embodiment, the at least one starch is selected from the group consisting of tapioca, modified corn starch, or combinations thereof.

In an embodiment, the puree is selected from the group consisting of fruit, vegetable, or combinations thereof.

In an embodiment, the method includes adding milk protein concentrates to the mixture prior to acidifying the mixture.

In an embodiment, the method includes adding a source of omega-3 fatty acids to the mixture prior to acidifying the mixture.

In an embodiment, the method includes adding vitamins and/or minerals to the mixture before acidifying the mixture.

In an embodiment, the method includes aseptically thermally processing the mixture at a temperature up to about 99°c (210°F).

In an embodiment, the method includes cooling the mixture to a temperature below about 38°C (100°F).

In an embodiment, the method includes packaging and refrigerating the mixture.

In an embodiment, the method includes adding at least one flavor after homogenizing the mixture.

In an embodiment, the method includes adding at least one color after homogenizing the mixture.

In an embodiment, the method includes adding at least one protein concentrate to the mixture before aseptically thermally processing the mixture.

In yet another embodiment, a method for making a shelf stable, acidified, dairy and/or dairy-like composition is provided. The method includes mixing milk, water, pectin, sugar, at least one starch, maltodextrin, and at least one puree to form a mixture, acidifying the mixture, adding carrageenan to the mixture, homogenizing the mixture with a dual-stage homogenizer, aseptically thermally processing the mixture, and cooling the mixture.

In an embodiment, the at least one starch is selected from the group consisting of tapioca, modified corn starch, or combinations thereof.

In an embodiment, the puree is selected from the group consisting of fruit, vegetable, or combinations thereof.

In an embodiment, the method includes adding milk protein concentrates to the mixture prior to acidifying the mixture.

In an embodiment, the method includes adding a source of omega-3 fatty acids to the mixture prior to acidifying the mixture.

In an embodiment, the method includes adding vitamins and/or minerals to the mixture before acidifying the mixture.

In an embodiment, the method includes aseptically thermally processing the mixture at a temperature up to about 99°C (210°F).

In an embodiment, the method includes cooling the mixture to a temperature below about 38°C (100°F).

In an embodiment, the method includes packaging and refrigerating the mixture.

In an embodiment, the method includes adding at least one protein concentrate to the mixture before aseptically thermally processing the mixture.

An advantage of the present disclosure is to provide a shelf-stable acidified dairy and/or dairy-like composition.

Another advantage of the present disclosure is to provide a shelf-stable composition having an improved stabilizer system.

Yet another advantage of the present disclosure is to provide an improved stabilizer system that enhances the texture and mouth-feel of an acidified shelf-stable composition.

Still yet another advantage of the present disclosure is to provide a shelf-stable composition with a thicker body and creamy mouth-feel without the use of added amounts of protein.

Another advantage of the present disclosure is to provide methods for making shelf-stable acidified dairy and/or dairy-like compositions.

Additional features and advantages are described herein, and will be apparent from the following Detailed Description and the figures.

### BRIEF DESCRIPTION OF THE FIGURES

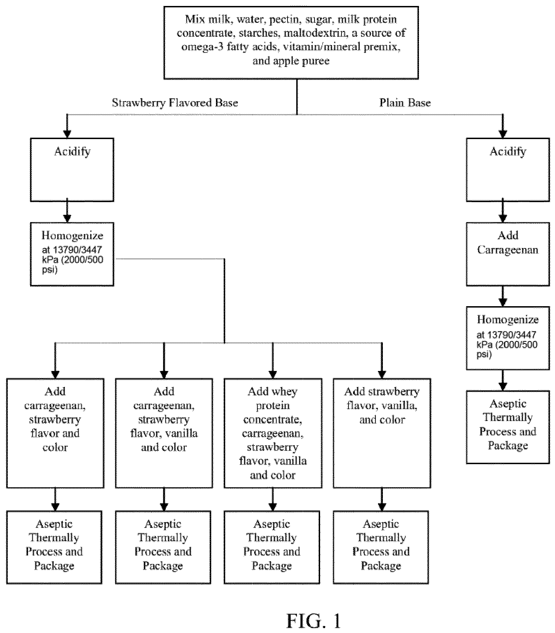

FIG. 1 illustrates a flow chart of processes used to manufacture a flavored or plain shelf-stable, acidified, dairy and/or dairy-like product in accordance with an embodiment of the present disclosure.

### DETAILED DESCRIPTION

As used herein, "about" is understood to refer to numbers in a range of numerals. Moreover, all numerical ranges herein should be understood to include all integer, whole or fractions, within the range.

As used herein the term "amino acid" is understood to include one or more amino acids. The amino acid can be, for example, alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

As used herein, "animal" includes, but is not limited to, mammals, which include but is not limited to, rodents, aquatic mammals, domestic animals such as dogs and cats, farm animals such as sheep, pigs, cows and horses, and humans. Wherein the terms "animal" or "mammal" or their plurals are used, it is contemplated that it also applies to any animals that are capable of the effect exhibited or intended to be exhibited by the context of the passage.

As used herein, the term "antioxidant" is understood to include any one or more of various substances such as beta-carotene (a vitamin A precursor), vitamin C, vitamin E, and selenium that inhibit oxidation or reactions promoted by Reactive Oxygen Species ("ROS") and other radical and non-radical species. Additionally, antioxidants are molecules capable of slowing or preventing the oxidation of other molecules. Non-limiting examples of antioxidants include carotenoids, coenzyme Q10 ("CoQ10"), flavonoids, glutathione, Goji (wolfberry), hesperidin, lactowolfberry, lignan, lutein, lycopene, polyphenols, selenium, vitamin A, vitamin B₁, vitamin B₆, vitamin B₁₂, vitamin C, vitamin D, vitamin E, zeaxanthin, or combinations thereof.

As used herein, a "carbohydrate" or "carbohydrates" are meant to include:
Monosaccharides include Trioses (such as: Ketotriose (Dihydroxyacetone) • Aldotriose (Glyceraldehyde)); Tetroses which include: Ketotetrose (such as: Erythrulose) and Aldotetroses (such as:Erythrose, Threose); Pentoses which include: Ketopentose (such as:Ribulose, Xylulose) Aldopentose (such as:Ribose, Arabinose, Xylose, Lyxose), Deoxy sugar (such as: Deoxyribose); Hexoses which include: Ketohexose (such as:Psicose, Fructose, Sorbose, Tagatose), Aldohexose (such as: Allose, Altrose, Glucose, Mannose, Gulose, Idose, Galactose, Talose), Deoxy sugar (such as: Fucose, Fuculose, Rhamnose); Heptose (such as: Sedoheptulose); Octose; Nonose (such as: Neuraminic acid);
Disaccharides which include: Sucrose; Lactose; Maltose; Trehalose; Turanose; Cellobiose; kojiboise; nigerose; isomaltose; and palatinose;
Oligosaccharides which include: corn syrups and maltodextrin; and
Polysaccharides which include: glucan (such as dextrin, dextran, beta-glucan), glycogen, mannan, galactan, and starch (such as those from corn, wheat, tapioca, rice, and potato, including Amylose and Amylopectin. The starches can be natural or modified or gelatinized);
and combinations thereof.

Carbohydrates also include source of sweeteners such as honey, maple syrup, glucose (dextrose), corn syrup, corn syrup solids, high fructose corn syrups, crystalline fructose, juice concentrates, and crystalline juice.

As used herein, "effective amount" is an amount that prevents a deficiency, treats a disease or medical condition in an individual or, more generally, reduces symptoms, manages progression of the diseases or provides a nutritional, physiological, or medical benefit to the individual. A treatment can be patient- or doctor-related.

While the terms "individual" and "patient" are often used herein to refer to a human, the invention is not so limited. Accordingly, the terms "individual" and "patient" refer to any animal, mammal or human having or at risk for a medical condition that can benefit from the treatment.

As used herein, non-limiting examples of sources of omega-3 fatty acids such α-linolenic acid ("ALA"), docosahexaenoic acid ("DHA") and eicosapentaenoic acid ("EPA") include fish oil, krill, poultry, eggs, or other plant or nut sources such as flax seed, walnuts, almonds, algae, modified plants, etc.

As used herein, "food grade micro-organisms" means micro-organisms that are used and generally regarded as safe for use in food.

As used herein, "mammal" includes, but is not limited to, rodents, aquatic mammals, domestic animals such as dogs and cats, farm animals such as sheep, pigs, cows and horses, and humans. Wherein the term "mammal" is used, it is contemplated that it also applies to other animals that are capable of the effect exhibited or intended to be exhibited by the mammal.

The term "microorganism" is meant to include the bacterium, yeast and/or fungi, a cell growth medium with the microorganism, or a cell growth medium in which microorganism was cultivated.

As used herein, the term "minerals" is understood to include boron, calcium, chromium, copper, iodine, iron, magnesium, manganese, molybdenum, nickel, phosphorus, potassium, selenium, silicon, tin, vanadium, zinc, or combinations thereof.

As used herein, a "non-replicating" microorganism means that no viable cells and/or colony forming units can be detected by classical plating methods. Such classical plating methods are summarized in the microbiology book: James Monroe Jay, et al., Modern food microbiology, 7th edition, Springer Science, New York, N. Y. p. 790 (2005). Typically, the absence of viable cells can be shown as follows: no visible colony on agar plates or no increasing turbidity in liquid growth medium after inoculation with different concentrations of bacterial preparations ('non replicating' samples) and incubation under appropriate conditions (aerobic and/or anaerobic atmosphere for at least 24h). For example, bifidobacteria such as Bifidobacterium longum, Bifidobacterium lactis and Bifidobacterium breve or lactobacilli, such as Lactobacillus paracasei or Lactobacillus rhamnosus, may be rendered non-replicating by heat treatment, in particular low temperature/long time heat treatment.

As used herein, a "nucleotide" is understood to be a subunit of deoxyribonucleic acid ("DNA") or ribonucleic acid ("RNA"). It is an organic compound made up of a nitrogenous base, a phosphate molecule, and a sugar molecule (deoxyribose in DNA and ribose in RNA). Individual nucleotide monomers (single units) are linked together to form polymers, or long chains. Exogenous nucleotides are specifically provided by dietary supplementation. The exogenous nucleotide can be in a monomeric form such as, for example, 5'-Adenosine Monophosphate ("5'-AMP"), 5'-Guanosine Monophosphate ("5'-GMP"), 5'-Cytosine Monophosphate ("5'-CMP"), 5'-Uracil Monophosphate ("5'-UMP"), 5'-Inosine Monophosphate ("5'-IMP"), 5'-Thymine Monophosphate ("5'-TMP"), or combinations thereof. The exogenous nucleotide can also be in a polymeric form such as, for example, an intact RNA. There can be multiple sources of the polymeric form such as, for example, yeast RNA.

"Nutritional compositions," or "nutritional products" as used herein, are understood to include any number of wholesome food ingredients and possibly optional additional ingredients based on a functional need in the product and in full compliance with all applicable regulations. The optional ingredients may include, but are not limited to, conventional food additives, for example one or more, acidulants, additional thickeners, buffers or agents for pH adjustment, chelating agents, colorants, emulsifies, excipient, flavor agent, mineral, osmotic agents, a pharmaceutically acceptable carrier, preservatives, stabilizers, sugar, sweeteners, texturizers, and/or vitamins. The optional ingredients can be added in any suitable amount.

As used herein, "obesity" is a condition in which the natural energy reserve, stored in the fatty tissue of animals, in particular humans and other mammals, is increased to a point where there is increase in adiposity and it is associated with certain health conditions or increased mortality. "Obese" is defined for an adult human as having a body mass index ("BMI") greater than 30.

As used herein, "overweight" is a condition in which the natural energy reserve, stored in the fatty tissue of animals, in particular humans and other mammals. "Overweight" maybe associated with there is increase in adiposity and certain health conditions or increased mortality. "Overweight" is defined for an adult human as having a BMI between 25 and 30.

As used herein the term "patient" is understood to include an animal, especially a mammal, and more especially a human that is receiving or intended to receive treatment, as it is herein defined.

As used herein, "phytochemicals" or "phytonutrients" are non-nutritive compounds that are found in many foods. Phytochemicals are functional foods that have health benefits beyond basic nutrition, and are health promoting compounds that come from plant sources. "Phytochemicals" and "Phytonutrients" refers to any chemical produced by a plant that imparts one or more health benefit on the user. Non-limiting examples of phytochemicals and phytonutrients include those that are:
i) phenolic compounds which include monophenols (such as, for example, apiole, carnosol, carvacrol, dillapiole, rosemarinol); flavonoids (polyphenols) including flavonols (such as, for example, quercetin, fingerol, kaempferol, myricetin, rutin, isorhamnetin), flavanones (such as, for example, fesperidin, naringenin, silybin, eriodictyol), flavones (such as, for example, apigenin, tangeritin, luteolin), flavan-3-ols (such as, for example, catechins, (+)-catechin, (+)-gallocatechin, (-)-epicatechin, (-)-epigallocatechin, (-)-epigallocatechin gallate (EGCG), (-)-epicatechin 3-gallate, theaflavin, theaflavin-3-gallate, theaflavin-3'-gallate, theaflavin-3,3'-digallate, thearubigins), anthocyanins (flavonals) and anthocyanidins (such as, for example, pelargonidin, peonidin, cyanidin, delphinidin, malvidin, petunidin), isoflavones (phytoestrogens) (such as, for example, daidzein (formononetin), genistein (biochanin A), glycitein), dihydroflavonols, chalcones, coumestans (phytoestrogens), and Coumestrol; Phenolic acids (such as: Ellagic acid, Gallic acid, Tannic acid, Vanillin, curcumin); hydroxycinnamic acids (such as, for example, caffeic acid, chlorogenic acid, cinnamic acid, ferulic acid, coumarin); lignans (phytoestrogens), silymarin, secoisolariciresinol, pinoresinol and lariciresinol); tyrosol esters (such as, for example, tyrosol, hydroxytyrosol, oleocanthal, oleuropein); stilbenoids (such as, for example, resveratrol, pterostilbene, piceatannol) and punicalagins;
ii) terpenes (isoprenoids) which include carotenoids (tetraterpenoids) including carotenes (such as, for example, α-carotene, β-carotene, γ-carotene, δ-carotene, lycopene, neurosporene, phytofluene, phytoene), and xanthophylls (such as, for example, canthaxanthin, cryptoxanthin, aeaxanthin, astaxanthin, lutein, rubixanthin); monoterpenes (such as, for example, limonene, perillyl alcohol); saponins; lipids including: phytosterols (such as, for example, campesterol, beta sitosterol, gamma sitosterol, stigmasterol), tocopherols (vitamin E), and ω-3, -6, and -9 fatty acids (such as, for example, gamma-linolenic acid); triterpenoid (such as, for example, oleanolic acid, ursolic acid, betulinic acid, moronic acid);
iii) betalains which include Betacyanins (such as: betanin, isobetanin, probetanin, neobetanin); and betaxanthins (non glycosidic versions) (such as, for example, indicaxanthin, and vulgaxanthin);
iv) organosulfides, which include, for example, dithiolthiones (isothiocyanates) (such as, for example, sulphoraphane); and thiosulphonates (allium compounds) (such as, for example, allyl methyl trisulfide, and diallyl sulfide), indoles, glucosinolates, which include, for example, indole-3-carbinol; sulforaphane; 3,3'-diindolylmethane; sinigrin; allicin; alliin; allyl isothiocyanate; piperine; syn-propanethial-S-oxide;
v) protein inhibitors, which include, for example, protease inhibitors;
vi) other organic acids which include oxalic acid, phytic acid (inositol hexaphosphate); tartaric acid; and anacardic acid; or
vii) combinations thereof.

As used herein, a "prebiotic" is a food substance that selectively promotes the growth of beneficial bacteria or inhibits the growth or mucosal adhesion of pathogenic bacteria in the intestines. They are not inactivated in the stomach and/or upper intestine or absorbed in the gastrointestinal tract of the person ingesting them, but they are fermented by the gastrointestinal microflora and/or by probiotics. Prebiotics are, for example, defined by Glenn R. Gibson and Marcel B. Roberfroid, Dietary Modulation of the Human Colonic Microbiota: Introducing the Concept of Prebiotics, J. Nutr. 1995 125: 1401-1412. Non-limiting examples of prebiotics include acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, or their hydrolysates, or combinations thereof.

As used herein, probiotic micro-organisms (hereinafter "probiotics") are food-grade microorganisms (alive, including semi-viable or weakened, and/or non-replicating), metabolites, microbial cell preparations or components of microbial cells that could confer health benefits on the host when administered in adequate amounts, more specifically, that beneficially affect a host by improving its intestinal microbial balance, leading to effects on the health or well-being of the host. See, Salminen S, Ouwehand A. Benno Y. et al., "Probiotics: how should they be defined?," Trends Food Sci. Technol., 1999:10, 107-10. In general, it is believed that these micro-organisms inhibit or influence the growth and/or metabolism of pathogenic bacteria in the intestinal tract. The probiotics may also activate the immune function of the host. For this reason, there have been many different approaches to include probiotics into food products. Non-limiting examples of probiotics include *Aerococcus, Aspergillus, Bacillus, Bacteroides, Bifidobacterium, Candida, Clostridium, Debaromyces, Enterococcus, Fusobacterium, Lactobacillus, Lactococcus, Leuconostoc, Melissococcus, Micrococcus, Mucor, Oenococcus, Pediococcus, Penicillium, Peptostrepococcus, Pichia, Propionibacterium, Pseudocatenulatum, Rhizopus, Saccharomyces, Staphylococcus, Streptococcus, Torulopsis, Weissella,* or combinations thereof.

The terms "protein," "peptide," "oligopeptides" or "polypeptide," as used herein, are understood to refer to any composition that includes, a single amino acids (monomers), two or more amino acids joined together by a peptide bond (dipeptide, tripeptide, or polypeptide), collagen, precursor, homolog, analog, mimetic, salt, prodrug, metabolite, or fragment thereof or combinations thereof. For the sake of clarity, the use of any of the above terms is interchangeable unless otherwise specified. It will be appreciated that polypeptides (or peptides or proteins or oligopeptides) often contain amino acids other than the 20 amino acids commonly referred to as the 20 naturally occurring amino acids, and that many amino acids, including the terminal amino acids, may be modified in a given polypeptide, either by natural processes such as glycosylation and other post-translational modifications, or by chemical modification techniques which are well known in the art. Among the known modifications which may be present in polypeptides of the present invention include, but are not limited to, acetylation, acylation, ADP-ribosylation, amidation, covalent attachment of a flavanoid or a heme moiety, covalent attachment of a polynucleotide or polynucleotide derivative, covalent attachment of a lipid or lipid derivative, covalent attachment of phosphatidylinositol, cross-linking, cyclization, disulfide bond formation, demethylation, formation of covalent cross-links, formation of cystine, formation of pyroglutamate, formylation, gamma-carboxylation, glycation, glycosylation, glycosylphosphatidyl inositol ("GPI") membrane anchor formation, hydroxylation, iodination, methylation, myristoylation, oxidation, proteolytic processing, phosphorylation, prenylation, racemization, selenoylation, sulfation, transfer-RNA mediated addition of amino acids to polypeptides such as arginylation, and ubiquitination. The term "protein" also includes "artificial proteins" which refers to linear or non-linear polypeptides, consisting of alternating repeats of a peptide.

Examples of proteins include dairy based proteins, plant based proteins, animal based proteins and artificial proteins. Dairy based proteins include, for example, casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate. Plant based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and it fractions including zein, rice, oat, potato, peanut, green pea powder, green bean powder, and any proteins derived from beans, lentils, and pulses. Animal based proteins may be selected from the group consisting of beef, poultry, fish, lamb, seafood, or combinations thereof.

As used herein, the term "shelf-stable" means capable of being stored at room temperature (e.g., about 20 °C to about 25 °C) for long periods (e.g., more than 3 months) without becoming spoiled or rotten. Typical acidified dairy and/or dairy-like products normally need to be stored refrigerated, but the shelf-stable acidified dairy and/or dairy-like products in embodiments of the present disclosure have been processed so that they can be safely stored in a sealed container at room or ambient temperature for a usefully long shelf life without unacceptably changing their taste or texture. The acidified dairy and/or dairy-like product produced can be shelf-stable, for example, for more than 3 months, 6 months, 12 months, 18 months, etc.

As used herein, a "synbiotic" is a supplement that contains both a prebiotic and a probiotic that work together to improve the microflora of the intestine.

As used herein, the terms "treatment," "treat" and "to alleviate" include both prophylactic or preventive treatment (that prevent and/or slow the development of a targeted pathologic condition or disorder) and curative, therapeutic or disease-modifying treatment, including therapeutic measures that cure, slow down, lessen symptoms of, and/or halt progression of a diagnosed pathologic condition or disorder; and treatment of patients at risk of contracting a disease or suspected to have contracted a disease, as well as patients who are ill or have been diagnosed as suffering from a disease or medical condition. The term does not necessarily imply that a subject is treated until total recovery. The terms "treatment" and "treat" also refer to the maintenance and/or promotion of health in an individual not suffering from a disease but who may be susceptible to the development of an unhealthy condition, such as nitrogen imbalance or muscle loss. The terms "treatment," "treat" and "to alleviate" are also intended to include the potentiation or otherwise enhancement of one or more primary prophylactic or therapeutic measure. The terms "treatment," "treat" and "to alleviate" are further intended to include the dietary management of a disease or condition or the dietary management for prophylaxis or prevention a disease or condition.

As used herein the term "vitamin" is understood to include any of various fat-soluble or water-soluble organic substances (examples include vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, folic acid and biotin) essential in minute amounts for normal growth and activity of the body and obtained naturally from plant and animal foods or synthetically made, pro-vitamins, derivatives, analogs.

In an embodiment, a source of vitamins or minerals can include at least two sources or forms of a particular nutrient. This represents a mixture of vitamin and mineral sources as found in a mixed diet. Also, a mixture may also be protective in case an individual has difficulty absorbing a specific form, a mixture may increase uptake through use of different transporters (e.g., zinc, selenium), or may offer a specific health benefit. As an example, there are several forms of vitamin E, with the most commonly consumed and researched being tocopherols (alpha, beta, gamma, delta) and, less commonly, tocotrienols (alpha, beta, gamma, delta), which all vary in biological activity. There is a structural difference such that the tocotrienols can more freely move around the cell membrane; several studies report various health benefits related to cholesterol levels, immune health, and reduced risk of cancer development. A mixture of tocopherols and tocotrienols would cover the range of biological activity.

Shelf-stable acidified dairy and/or dairy-like products and methods of making same are provided. The shelf-stable acidified products can be shelf-stable with enhanced texture, body and mouth-feel. In a general embodiment, the present disclosure provides a dairy and/or dairy-like substance, and a stabilizer system having a combination of at least carrageenan, pectin, maltodextrin, tapioca and modified corn starches. In an embodiment, the carrageenan is iota carrageenan, the pectin is high methoxyl pectin, and the tapioca is native tapioca. The compositions of the present disclosure may be manufactured as a snack product, or may also be consumed as a full meal, or part of a full meal.

The dairy and/or a dairy-like substance may include a dairy ingredient, a dairy-like ingredient, or both a dairy and a dairy-like ingredient. Non-limiting examples of dairy ingredients include milk, cream, dehydrated or fresh yogurt, cheese, sour cream, buttermilk, kefir, whey protein concentrates, milk protein concentrates, or combinations thereof. Non-limiting examples of dairy-like ingredients include nut milk, almond milk, soy milk, coconut milk, rice milk, or combinations thereof. The skilled artisan will appreciate that other dairy or dairy-like ingredients may be used to make the compositions and that the present disclosure is not limited to the examples disclosed herein. The dairy and/or dairy-like substances of the present compositions may be provided in amounts ranging from about 25% to about 75% by weight of the composition, or from about 30% to about 70%, or from about 35% to about 65%, or from about 40% to about 60%, or from about 45% to about 55% or about 50%. In an embodiment, the dairy and/or dairy-like substances of the present compositions are provided in an amount of about 55%. If the dairy or dairy-like substances are protein concentrates, the concentrates may be provided in amounts ranging from about 0.25% to about 1.5% by weight of the composition, or from about 0.5% to about 1.25%, or from about 0.75% to about 1.0%, or 0.3%, or 0.4%, or 0.5%, or 0.6%, or 0.7%, or 0.8%, or 0.9% or 1.0%.

Compositions of the present disclosure also include a unique stabilizing system that helps to provide the compositions with a thicker body and creamy mouth-feel without the use of excessive or added amount of protein. The stabilizing system of the present disclosure includes at least a combination of iota carrageenan, high methoxyl pectin, maltodextrin, native tapioca and modified corn starches. Applicant has surprisingly found that the specific combination of the five stabilizers provides several advantages over known stabilizer combinations. For example, the combination of iota carrageenan, high methoxyl pectin, maltodextrin, native tapioca and modified corn starches advantageously increases the thickness of a composition, provides body to the composition, and improves the mouth-feel of the composition. In an embodiment, for example, a composition of the present disclosure has a pudding-like consistency. The skilled artisan will appreciate, however, that other stabilizers, starches or sugars may also be added to the compositions of the present disclosure including, for example, gelatin, agar, acacia gum, sodium alginate, xanthan gum, locust bean gum, carboxymethyl cellulose, high gelling whey protein concentrate, etc.

The high methoxyl pectin of the stabilizing system may be provided in the present compositions in an amount ranging from 0.2% to 1.5% w/w of the composition, or from 0.3% to 1.2% w/w, or from 0.3% to 0.9% w/w, or from 0.4% to about 0.6% w/w of the composition.

The carrageenan of the stabilizing system may be provided in the present compositions in an amount ranging from 0.2% to 2.0% w/w, or from 0.2% to 15% w/w, or from 0.2% to 1.0% w/w, or from 0.3% to 0.5% w/w of the composition. The carrageenan may be any type of known carrageenan including, for example, kappa, iota and lambda carrageenans.

The tapioca of the stabilizing system may be provided in the present compositions in an amount ranging from 1.0% to 4.0% w/w, or from 1.0% to 3.5% w/w, or from 1.25% to 3.0% w/w, or from 1.25% to 2.5% w/w, or from 1.5% to 2.0% w/w of the composition.

The modified corn starch of the stabilizing system may be provided in the present compositions in an amount ranging from 1.0% to 4.0% w/w of the composition, or from 1.0% to 3.5% w/w, or from 1.25% to 3.0% w/w, or from 1.25% to 2.5% w/w, or from 1.5% to 2.0% w/w of the composition.

The maltodextrin of the stabilizing system may be provided in the present compositions in an amount ranging from 1.0% to 5.0% w/w of the composition, or from 1.25% to 4.5% w/w, or from 1.5% to 4.0% w/w, or from 1.75% to 3.5% w/w, or from 1.75% to 3.25% w/w, or from 2.0% to 3.0% w/w of the composition.

In an embodiment of the present invention, the compositions are not fermented. Instead, the compositions are acidified with an edible acidulant including, but not limited to, lactic acid, malic acid, citric acid, calcium citrate, tartaric acid, phosphoric acid, glucono delta lactone, or combinations thereof.

In an embodiment of the present invention, the composition further comprises carbohydrate, fat, canola oil, flaxseed oil, fish oil, a source of omega-3 fatty acids, protein, fiber, flavor, color, fruit puree, vegetable puree, vitamins, minerals, DHA, EPA, antioxidants, amino acids, fish oil, phytochemicals, probiotics, prebiotics, synbiotics, non-replicating microorganism, liquid whole grain, or combinations thereof.

In an embodiment, sources of omega-3 fatty acids include, but are not limited to canola oil, flaxseed oil, fish oil, algae, modified plants, etc. Non-limiting examples of fish oils include docosahexaenoic acid ("DHA") and eicosapentaenoic acid ("EPA") and Arachidonic acid ("ARA"). The source of omega-3 fatty acids may be present in the compositions in an amount ranging from about 0.5% to about 5.0% by weight of the composition, or from about 1.0% to about 4.0%, or from about 2.0% to about 3.0%, or about 1.5%, or about 2.5%, or about 3.5%, or about 4.5%. In an embodiment, the source of omega-3 fatty acids is present in the compositions in an amount of about 2.0%.

The compositions of the present disclosure may also include sugar (e.g., granulated sugar) in amounts ranging from about 3.0% to about 10% by weight of the composition, or from about 4.0% to about 9.0%, or from about 5.0% to about 8.0%, or about 6.0% or 7.0%. In an embodiment, sugar is provided in an amount of about 5.5%.

In an embodiment of the present invention, the composition further comprises high intensity artificial or natural sweeteners which can also be used in the shelf-stable fermented dairy or dairy-like product. Preferred sweeteners include, but are not limited to sucralose, aspartame, salts of acesulfame, alitame, saccharin and its salts, cyclamic acid and its salts, glycyrrhizin, stevioside, dihydrochalcones, thaumatin, monellin, and the like, alone or in combination. The sweetener or sweetness enhancer may be provided in an amount ranging from about 0.1% to about 2.0% by weight of the composition, or from about 0.2% to about 1.5%, or from about 0.3% to about 1.0%, or about 0.4%, or 0.5%, or 0.6%, or 0.7%, or 0.8%, or 0.9%. In an embodiment, the sweetener or sweetness enhancer is provided in an amount of about 0.25%.

In an embodiment of the present invention, the composition further comprises at least one fruit puree. In an embodiment of the present invention, the composition further comprises at least one vegetable puree. In an embodiment of the present invention, the composition further comprises at least one fruit puree and at least one vegetable puree.

In an embodiment, the puree composition includes a pureed fruit including but not limited to apple, orange, pear, peach, strawberry, banana, cherry, pineapple, kiwi, grape, blueberry, raspberry, mango, guava, cranberry, blackberry or a combination thereof. The fruit puree can be present in an amount ranging from about 0% to about 80% by weight, from about 3.0% to about 20% by weight or from about 5.0% to about 10% by weight. Flavor components in general can range from about 0% to about 10%, from about 0.001% to about 5.0% or from about 0.1 % to about 4.0% by weight.

In an embodiment, the composition of the present invention can include a vegetable purees selected from the group including but not limited to sweet potatoes, carrots, peas, green beans, squash, alone or in combinations thereof. The vegetable puree may be provided in amounts similar to those discussed above with respect to fruit purees.

The compositions of the present disclosure may also include one or more thickeners. Thickeners can include, but are not limited to physically or chemically modified flours and/or starches from sources such as rice, wheat, oat, barley, tapioca, quinoa, rye, amaranth, corn, or potato.

The nutritional compositions may also include grains. The grains may include, for example, whole grains, which may be obtained from different sources. The different sources may include semolina, cones, grits, flour and micronized grain (micronized flour), and may originate from a cereal or a pseudo-cereal. In an embodiment, the grain is a hydrolyzed whole grain component. As used herein, a "hydrolyzed whole grain component" is an enzymatically digested whole grain component or a whole grain component digested by using at least an alpha-amylase, which alpha-amylase shows no hydrolytic activity towards dietary fibers when in the active state. The hydrolyzed whole grain component may be further digested by the use of a protease, which protease shows no hydrolytic activity towards dietary fibers when in the active state. The hydrolyzed whole grain component may be provided in the form of a liquid, a concentrate, a powder, a juice, a puree, or combinations thereof. In an embodiment, the compositions include at least one liquid whole grain.

The present nutritional compositions may also include other beneficial or functional ingredients. For example, the nutritional compositions may include a source of protein. Protein from food is broken down into amino acids by the digestive system. These amino acids are then used for building and repairing muscles, red blood cells, hair and other tissues, and for making hormones. Adequate protein intake is important for a healthy immune system. Because protein is a source of calories (e.g., 4 kcal per gram), it will be used for energy if insufficient amounts of carbohydrates are available due to skipped meals, heavy exercise, etc. Examples of sources of protein include, but are not limited to, animal products like meat, fish, poultry, milk, cheese and eggs, and vegetable sources like legumes (e.g., beans, lentils, dried peas, nuts) and seeds.

In an embodiment, the source of protein in the present compositions may be dietary protein including, but not limited to animal protein (such as, for example, meat protein or egg protein), dairy protein (such as, for example, casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate)), vegetable protein (such as, for example, soy protein, wheat protein, rice protein, and pea protein), or combinations thereof. In an embodiment, the protein source is selected from the group consisting of whey, chicken, corn, caseinate, wheat, flax, soy, carob, pea, or combinations thereof.

In an embodiment, the nutritional compositions further include one or more prebiotics. The prebiotics may be selected from the group consisting of acacia gum, alpha glucan, arabinogalactans, beta glucan, dextrans, fructooligosaccharides, galactooligosaccharides, galactomannans, gentiooligosaccharides, glucooligosaccharides, guar gum, inulin, isomaltooligosaccharides, lactosucrose, lactulose, levan, maltodextrins, partially hydrolyzed guar gum, pecticoligosaccharides, retrograded starch, soyoligosaccharides, sugar alcohols, xylooligosaccharides, or combinations thereof.

In an embodiment, the nutritional compositions further include one or more probiotics selected from the group consisting of *Aerococcus, Aspergillus, Bacteroides, Bifidobacterium, Candida, Clostridium, Debaromyces, Enterococcus, Fusobacterium, Lactobacillus, Lactococcus, Leuconostoc, Melissococcus, Micrococcus, Mucor, Oenococcus, Pediococcus, Penicillium, Peptostrepococcus, Pichia, Propionibacterium, Pseudocatenulatum, Rhizopus, Saccharomyces, Staphylococcus, Streptococcus, Torulopsis, Weissella,* or combinations thereof. The probiotic may also be a non-replicating microorganism.

The nutritional compositions may also include a source of fiber, fiber or a blend of different types of fiber. The fiber blend may contain a mixture of soluble and insoluble fibers. Soluble fibers may include, for example, fructooligosaccharides, acacia gum, inulin, etc. Insoluble fibers may include, for example, pea outer fiber.

In an embodiment, the nutritional compositions further include a source of carbohydrates. Carbohydrates can be grouped into two categories: simple and complex. Simple carbohydrates are sugars, whereas complex carbohydrates consist of starch and dietary fiber. Carbohydrates provide about 4 kcal (kcal = kilocalories = Calories) per gram (except for fiber) and are the energy that is used first to fuel muscles and the brain. Soluble fiber (fruits, legumes, nuts, seeds, brown rice, and oat, barley and rice brans) lowers blood cholesterol and helps to control blood sugar levels while providing very little energy. Insoluble fiber (wheat and corn bran, whole-grain breads and cereals, vegetables, fruit skins, nuts) doesn't provide any calories. It helps to alleviate digestive disorders like constipation or diverticulitis and may help prevent colon cancer. Most calories (e.g., 55-60%) in a typical diet should come from carbohydrates. Sources of carbohydrates include grain products such as breads, cereals, pasta, and rice as well as fruits and vegetables. In an embodiment, any suitable carbohydrates may be used in the present compositions including, but not limited to, sucrose, lactose, glucose, fructose, corn syrup solids, maltodextrin, modified starch, amylose starch, tapioca starch, corn starch, or combinations thereof.

In an embodiment, the compositions further include a source of fat. The source of fat may include any suitable fat or fat mixture. The fat in foods may include a mixture of saturated and unsaturated fat. Animal-based foods such as meats and milk products are higher in saturated fat whereas most vegetable oils are higher in unsaturated fat. Compared to carbohydrates and proteins, each gram of fat provides more than twice the amount of calories (e.g., 9 kcal per gram). Nevertheless, dietary fat does play an important role in a healthy diet. Fat maintains skin and hair, cushions vital organs, provides insulation, and is necessary for the production and absorption of certain vitamins and hormones. Nutrition guidelines state that Canadians should include no more than 30% of energy (calories) as fat and no more than 10% of energy as saturated fat. In an embodiment, the fat of the present compositions may include, but is not limited to, vegetable fat (such as olive oil, corn oil, sunflower oil, rapeseed oil, hazelnut oil, soy oil, palm oil, coconut oil, canola oil, lecithins, and the like) and animal fats (e.g., milk fat).

In another embodiment, the composition further includes one or more amino acids. Non-limiting examples of amino acids include isoleucine, alanine, leucine, asparagine, lysine, aspartate, methionine, cysteine, phenylalanine, glutamate, threonine, glutamine, tryptophan, glycine, valine, proline, serine, tyrosine, arginine, citrulline, histidine, or combinations thereof.

In an embodiment, the composition further includes one or more synbiotics, phytonutrients and/or antioxidants. The antioxidants may be selected from the group consisting of carotenoids, coenzyme Q10 ("CoQ10"), flavonoids, glutathione, Goji (Wolfberry), hesperidin, Lactowolfberry, lignan, lutein, lycopene, polyphenols, selenium, vitamin A, vitamin B1, vitamin B6, vitamin B12, vitamin C, vitamin D, vitamin E, or combinations thereof.

In an embodiment, the composition further includes one or more vitamins and minerals, a vitamin/mineral premix, or combinations thereof. Vitamins help to regulate chemical reactions in the body. There are 13 vitamins, including vitamins A, B complex, C, D, E, and K. Because most vitamins cannot be made in the body, vitamins must be obtained through the diet. Many people say that they feel more energetic after consuming vitamins, but vitamins are not a source of energy (calories). Vitamins are best consumed through a varied diet rather than as a supplement because there is little chance of taking too high a dose. Non-limiting examples of vitamins include Vitamins A, B-complex (such as B-1, B-2, B-6 and B-12), C, D, E and K, niacin and acid vitamins such as pantothenic acid and folic acid, biotin, or combinations thereof.

Minerals are components of foods that are involved in many body functions. For example, calcium and magnesium are important for bone structure, and iron is needed for red blood cells to transport oxygen. Like vitamins, minerals are not a source of energy and are best obtained through a varied diet rather than supplements. Non-limiting examples of minerals include calcium, iron, zinc, magnesium, iodine, copper, phosphorus, manganese, potassium, chromium, molybdenum, selenium, nickel, tin, silicon, vanadium, boron, or combinations thereof. In an embodiment wherein the vitamins and minerals are provided as a premix, the vitamin/mineral premix may be provided in amounts ranging from about 0.1% to about 0.3% by weight of the compositions, or from about 0.15% to about 0.2%, or about 0.175%.

Other optional ingredients can be added to make the composition sufficiently palatable. For example, the nutritional compositions of the present disclosure can optionally include conventional food additives, such as any of, acidulants, additional thickeners, buffers or agents for pH adjustment, chelating agents, colorants, emulsifiers, excipients, flavor agents, minerals, osmotic agents, pharmaceutically acceptable carriers, preservatives, stabilizers, sugars, sweeteners, texturizers, or combinations thereof. The optional ingredients can be added in any suitable amount.

Applicant has found that the timing and how each of the stabilizers are added are important. Indeed, changes in the order of addition of the stabilizers has been found to lead to a decrease or loss of mouth-feel, a thin consistency and/or some graininess with the resulting composition.

Methods for manufacturing the compositions of the present disclosure are also provided. In an embodiment, for example, a method for manufacturing a composition of the present disclosure includes the steps of weighing predetermined amounts of water and/or at least one milk, and dry-blending pectin and a portion of an amount of granulated sugar in a predetermined weight ratio. The weight ratio may be about 1:1, or about 1:2 or about 2:1, or the like. The pectin/sugar blend may then be added to the milk/water mixture. Milk protein concentrates may then be added to the mixture before another predetermined amount of granulated sugar is added, along with starches, maltodextrin, and a vitmin/mineral premix. In an embodiment, a source of omega-3 fatty acids (e.g., canola oil) is then added, as well any purees (e.g., apple, strawberry, etc.), flavoring and/or coloring (if desired).

The resulting composition from the above-described steps may then be acidified with an acidulant such as, for example, lactic acid. The acidification step may result in a pH ranging from about 3.8 to about 4.2, or from about 3.9 to about 4.1, or about 4.0. The desired pH may be achieved during a time period from about 2-3 minutes, which may result in a slightly higher pH than originally measured. In this regard, there is typically a drift upwards in pH over time due to buffering capacity of the mixture, so the target pH should 26 depend on the rate that acid is added. Longer acidification times translate to a higher target pH, due to absorption of more buffering capacity during acidification.

Following acidification, carrageenan and a predetermined amount of granulated sugar arc dry-blended in a weight ratio ranging from about 1:1, or about 1:2 or about 2:1, or the like. The carrageenan may be any type of carrageenan including, for example, kappa, lambda, iota, or combinations thereof. The carrageenan/sugar blend can then be added to the acidified mixture and the entire mixture homogenized in a dual stage homogenizer, as is known in the art, at 17237/3447 kPa (2500/500 psi) (total/2d stage pressures). Any remaining ingredients can then be added including, for example, additional flavors, starches, water, protein concentrates (e.g., whey protein concentrates), etc. The mixture may then be held at a specific temperature with agitation prior to thermal processing. The temperature, for example, may be less than about 10°C (50°F), or less than about 7°C (45°F), or less than about 4°C (40°F), or less than about 2°C (35°F).

The pH may also be rechecked prior to thermal processing. If necessary, additional edible acid may be added to the composition to achieve a pH ranging from about 4.0 to about 4.5, or about 4.1 to about 4.3, or about 4.15 to about 4.25 prior to thermal processing.

The composition may then be cooked (i.e., aseptically, thermally processed) at a temperature up to about 121°C (250°F), or about 116°C (240°F), or about 110°C (230°F), or about 104°C (220°F) or about 99°C (210°F), or about 93°C (200°F), or about 88°C (190°F), or about 82°C (180°F) or about 77°C (170°F). In an embodiment, the composition is aseptically, thermally processed at a temperature of about 99°C (210°F). The composition may then be cooled to a temperature below about 49°C (120°F), or about 43°C (110°F) or about 38°C (100°F), or about 32°C (90°F).

After cooling, the composition may be packaged and refrigerated. The refrigeration may be for an amount of time ranging from about 4 hours to about 12 hours, or about 5 hours, or about 6 hours, or about 7 hours, or about 8 hours, or about 9 hours, or about 10 hours, or about 11 hours. In an embodiment, the composition is refrigerated for an amount of time of about 8 hours (e.g., a typical overnight time period).

In an embodiment of the present invention is provided a method of preventing or treating obesity in an individual. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of preventing or treating obesity in an infant or child. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of providing a snack to an individual. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of providing a snack to an infant or child. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of providing a developmentally appropriate snack to an infant or child. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of providing nutrition to an individual. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment of the present invention is provided a method of providing nutrition to an infant or child. The method includes the step of administering a shelf stable, acidified, dairy and/or dairy-like composition having a dairy and/or dairy-like substance or dairy and dairy-like substance, and a stabilizer system. The stabilizer system includes a combination of carrageenan, pectin, maltodextrin, tapioca and modified corn starches.

In an embodiment, a method of making a shelf stable, acidified, dairy and/or dairy-like composition is provided. The method includes the following steps:
1. Mixing together pectin and granulated sugar with water and/or at least one milk;
2. Mixing starches and maltodextrin with the pectin, granulated sugar, milk and/or water;
3. Mixing a puree (any fruit or vegetable puree or combinations thereof) with the starches, pectin, granulated sugar, milk and/or water to form a mixture;
4. Adding an acid to acidify the mixture;
5. Mixing iota carrageenan with the acidified mixture;
6. Homogenizing the acidified mixture with carrageenan in a dual-stage homogenizer at about 17237/3447 kPa (2500/500 psi) to form a homogenized mixture;
7. Aseptically, thermally processing the homogenized mixture to form an aseptic composition;
8. Cooling the aseptic composition to a temperature below about 100°F; and
9. Packaging and refrigerating the composition.

In an embodiment, a method of making a shelf stable, acidified, dairy and/or dairy-like composition is provided. The method includes the following steps:
1. Weighing the ingredients and then mixing the pectin and granulated sugar with water and/or at least one milk;
2. Mixing starches and maltodextrin with the pectin, sugar, milk and/or water;
3. Mixing a puree (any fruit or vegetable puree or combinations thereof) with the starches, pectin, sugar, milk and/or water to form a mixture;
4. Adding an acid to acidify the mixture;
5. Adding iota carrageenan to the acidified mixture;
6. Homogenizing the acidified mixture with carrageenan in a dual-stage homogenizer at 17237/3447 kPa (2500/500 psi) to form a homogenized mixture;
7. Aseptically, thermally processing the homogenized mixture to form an aseptic composition;
8. Cooling the aseptic composition to a temperature that is less than about 100°F; and
9. Packaging and refrigerating the cooled, aseptic composition.

In an embodiment, at least one omega-3 fatty acid is added to the mixture prior to adding the acid. In this regard, at least one canola oil, at least one flaxseed oil, or at least one fish oil may be added to the mixture prior to adding the acid. In an embodiment, the acid is lactic acid.

In an embodiment, at least one flavor, or adding at least one color is added to the mixture prior to adding the acid.

In another embodiment, a method of making a shelf stable, acidified, dairy and/or dairy-like composition is provided. The method includes the following steps:
1. Mixing milk, water, pectin, sugar, starches, maltodextrin, and any purees to form a mixture;
2. Acidifying the mixture;
3. Homogenizing the mixture using a dual-stage homogenizer;
4. Adding carrageenan to the mixture;
5. Aseptically thermally processing the mixture; and
6. Cooling the mixture.

The method may further include adding milk protein concentrates, a source of omega-3 fatty acids, vitamins and minerals to the mixture before acidification.

The method may further include aseptically thermally processing the mixture at a temperature up to about 99°C (210°F), and cooling the mixture to a temperature below about 38°C (100°F).

The method may further include packaging and refrigerating the mixture, and the carrageenan may be iota carrageenan.

The method may further include adding flavors, colors, and protein concentrates to the mixture before aseptically thermally processing the mixture.

Using the stabilizer systems and methods of the present disclosure, Applicant has been able to achieve an acidified dairy or dairy-like product having a thicker body and a creamy mouth-feel without the use of added amounts of protein. The foregoing may be better understood by reference to the following example, which is presented for purposes of illustration and are not intended to limit the scope of the present disclosure.

By way of example and not limitation, the following examples are illustrative of various embodiments of the present disclosure.

### EXAMPLE

The composition formulations below illustrate two possible formulations for compositions of the present disclosure. The skilled artisan will appreciate, however, that the compositions of the present disclosure are not limited to the embodiments or examples disclosed herein. Furthermore, the examples disclosed below are bench-top formulations. As such, the skilled artisan will appreciate that the amounts and types of ingredients may be varied to allow for scale-up of the compositions for mass production.

| **Ingredient** | **Strawberry Flavored Product (w/w %)** | **Banana Flavored Product (w/w %)** |
|---|---|---|
| 1% Milk | 55 | 55 |
| Water | 8.865 | 9.235 |
| Canola Oil | 1.8 | 1.8 |
| Sugar | 5.5 | 5.5 |
| Pectin | 0.5 | 0.5 |
| Carrageenan | 0.4 | 0.4 |
| Milk Protein Concentrate | 0.87 | 0.87 |
| Whey Protein Concentrate | 1 | 1 |
| Tapioca | 1.75 | 1.75 |
| Modified Corn Starch | 1.75 | 1.75 |
| Maltodextrin | 2.5 | 2.5 |
| Vitamin/Mineral Premix | 0.175 | 0.175 |
| Calcium Citrate | 0 | 0 |
| Strawberry Puree | 10 | 0 |
| Apple Puree | 9 | 9 |
| Color (red) | 0.09 | 0 |
| Sweetness Enhancer | 0.25 | 0.25 |
| Strawberry Flavor | 0.55 | 0 |
| Banana Puree | 0 | 10 |
| Banana Flavor | 0 | 0.25 |
| Color (tumeric aquaresin) | 0 | 0.02 |
| **TOTAL** | **100** | **100** |

The sample formulations present above may be made by manufacturing procedures similar to those outlined in FIG. 1, which provides examples of manufacturing processes used to manufacture flavored bases (e.g., strawberry flavored bases), and a plain base (e.g., no flavoring). The skilled artisan will appreciate that different flavors and textures may be achieved by varying the types and amounts of ingredients added after the homogenization step for the strawberry flavored base, as is represented by the different formulations set forth near the bottom of FIG. 1.

## Claims

1. A shelf stable, acidified, dairy and/or dairy-like composition comprising:
a dairy and/or dairy-like component; and
a stabilizer system comprising a combination of at least carrageenan, pectin, maltodextrin, tapioca and modified corn starches;
wherein:
the pectin comprises from 0.2% to 1.5% w/w of the composition;
the carrageenan comprises from 0.2% to 2.0% w/w of the composition;
the tapioca comprises from 1.0% to 4.0% w/w of the composition;
the modified corn starch comprises from 1.0% to 4% w/w of the composition; and
the maltodextrin comprises from 1.0% to 5.0% w/w of the composition,
wherein the composition comprises a dairy-like ingredient selected from the group consisting of nut milk, almond milk, soy milk, coconut milk, rice milk, and
combinations thereof.

2. The composition according to Claim 1, wherein the composition is not fermented.

3. The composition according to Claim 1, wherein the stabilizer increases a thickness of the composition and/or
wherein the stabilizer provides body to the composition and/or
wherein the stabilizer improves a mouth-feel of the composition.

4. The composition according to Claim 1, wherein the composition comprises a dairy ingredient selected from the group consisting of milk, cream, yogurt, cheese, sour cream, buttermilk, kefir, and combinations thereof and/or
wherein the composition further comprises an ingredient selected from the group consisting of a source of carbohydrate, a source of fat, canola oil, flaxseed oil, a source of omega-3 fatty acids, a source of protein, a source of fiber, a flavor, a color, a fruit puree, a vegetable puree, vitamins, minerals, DHA, EPA, antioxidants, amino acids, fish oil, phytochemicals, probiotics, prebiotics, synbiotics, non-replicating microorganism, liquid whole grain, and combinations thereof and/or
further comprising at least one prebiotic selected from the group consisting of acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, their hydrolysates, and combinations thereof.

5. The composition according to Claim 1, further comprising at least one liquid whole grain.

6. The composition according to Claim 1, further comprising at least one fruit puree,
or further comprising at least one vegetable puree,
or further comprising at least one fruit puree and at least one vegetable puree.

7. The composition according to Claim 1, wherein said composition is developmentally appropriate for an infant or a child.

8. A method of providing nutrition to an individual comprising administering the composition selected from the group consisting of those claimed in Claim 1 to Claim 7.

9. The method according to Claim 8, wherein said individual is an infant or child.

10. The method according to Claim 8, wherein the providing nutrition is providing a snack.

11. A method for making a shelf stable, acidified, dairy and/or dairy-like composition, the method comprising:
mixing pectin and sugar with water and/or at least one milk;
mixing in tapioca, modified com starch, and maltodextrin;
mixing in a puree selected from the group consisting of fruit, vegetable, and
combinations thereof;
mixing in an acid;
mixing in carrageenan to form a composition;
homogenizing the composition 17237/3447 kPa;
aseptically thermally processing the composition at a temperature ranging from 82°C to 99°C;
cooling the composition; and
packaging the composition;

12. The method according to Claim 11, further comprising weighing the ingredients prior to mixing in starches.

13. The method according to Claim 11, further comprising dry blending pectin and sugar in 1:1 ratio prior to mixing in starches.

14. The method according to Claim 11, further comprising adding flavors:
a) prior to mixing in the acid;
b) after homogenizing the composition; or
c) prior to mixing in the acid and after homogenizing the composition.

15. The method according to Claim 11, further comprising adding at least one ingredient selected from the group consisting of a source of carbohydrate, a source of fat, canola oil, flaxseed oil, a source of omega-3 fatty acids, a source of protein, a source of fiber, a flavor, a color, a fruit puree, a vegetable puree, vitamins, minerals, DHA, EPA, antioxidants, amino acids, fish oil, phytochemicals, probiotics, prebiotics, synbiotics, non-replicating microorganism, liquid whole grain, and combinations:
a) prior to mixing in the acid;
b) after homogenizing the composition; or
c) prior to mixing in the acid and after homogenizing the composition.

## Patentansprüche

1. Lagerstabile, angesäuerte Milch- und/oder milchähnliche Zusammensetzung, die Folgendes umfasst:
eine Milch- und/oder milchähnliche Komponente; und
ein Stabilisatorsystem, das eine Kombination von mindestens Carrageen, Pektin, Maltodextrin, Tapioka und modifizierten Maisstärken umfasst;
wobei:
das Pektin zu 0,2 Gew.-% bis 1,5 Gew.-% der Zusammensetzung umfasst;
das Carrageen zu 0,2 Gew.-% bis 2,0 Gew.-% der Zusammensetzung umfasst;
das Tapioka zu 1,0 Gew.-% bis 4,0 Gew.-% der Zusammensetzung umfasst; die modifizierte Stärke zu 1,0 Gew.-% bis 4 Gew.-% der Zusammensetzung umfasst; und
das Maltodextrin zu 1,0 Gew.-% bis 5,0 Gew.-% der Zusammensetzung umfasst,
wobei die Zusammensetzung einen milchähnlichen Inhaltsstoff umfasst, der ausgewählt ist aus der Gruppe, bestehend aus Nussmilch, Mandelmilch, Sojamilch, Kokosnussmilch, Reismilch und Kombinationen davon.

2. Zusammensetzung nach Anspruch 1, wobei die Zusammensetzung nicht fermentiert ist.

3. Zusammensetzung nach Anspruch 1, wobei der Stabilisator eine Dicke der Zusammensetzung erhöht und/oder
wobei der Stabilisator der Zusammensetzung einen Körper verleiht und/oder
wobei der Stabilisator ein Mundgefühl der Zusammensetzung verbessert.

4. Zusammensetzung nach Anspruch 1, wobei die Zusammensetzung einen Milch-Inhaltsstoff umfasst, der ausgewählt ist aus der Gruppe, bestehend aus Milch, Sahne, Joghurt, Käse, saurer Sahne, Buttermilch, Kefir und Kombinationen davon, und/oder
wobei die Zusammensetzung ferner einen Inhaltsstoff umfasst, der ausgewählt ist aus der Gruppe, bestehend aus einer Kohlenhydratquelle, einer Fettquelle, Rapsöl, Leinsamenöl, einer Omega-3-Fettsäuren-Quelle, einer Proteinquelle, einer Ballaststoffquelle, einem Aroma, einer Farbe, einem Fruchtpüree, einem Gemüsepüree, Vitaminen, Mineralien, DHA, EPA, Antioxidantien, Aminosäuren, Fischöl, Phytochemikalien, Probiotika, Präbiotika, Synbiotika, nicht replizierendem Mikroorganismus, flüssigem Vollkorn und Kombinationen davon, und/oder ferner mindestens ein Präbiotikum, das ausgewählt ist aus der Gruppe, bestehend aus Gummi arabicum, Alpha-Glucan, Arabino-Galactan, Beta-Glucan, Dextranen, Fructooligosacchariden, Fucosyllactose, Galactooligosacchariden, Galactomannanen, Gentiooligosacchariden, Glucooligosacchariden, Guarkernmehl, Inulin, Isomaltooligosacchariden, Lactoneotetraose, Lactosaccharose, Lactulose, Levan, Maltodextrinen, Milch-Oligosacchariden, teilweise hydrolysiertem Guarkernmehl, Pecticoligosacchariden, resistenten Stärken, retrogradierter Stärke, Sialooligosacchariden, Sialyllactose, Soja-Oligosacchariden, Zuckeralkoholen, Xylooligosacchariden, deren Hydrolysaten und Kombinationen davon, umfasst.

5. Zusammensetzung nach Anspruch 1, die ferner mindestens ein flüssiges Vollkorn umfasst.

6. Zusammensetzung nach Anspruch 1, die ferner mindestens ein Fruchtpüree umfasst,
oder die ferner mindestens ein Gemüsepüree umfasst,
oder die ferner mindestens ein Fruchtpüree und mindestens ein Gemüsepüree umfasst.

7. Zusammensetzung nach Anspruch 1, wobei die Zusammensetzung entwicklungsgemäß für einen Säugling oder ein Kind geeignet ist.

8. Verfahren zum Bereitstellen von Ernährung an ein Individuum, das das Verabreichen der Zusammensetzung umfasst, die ausgewählt ist aus der Gruppe, bestehend aus denen, die in Anspruch 1 bis Anspruch 7 beansprucht sind.

9. Verfahren nach Anspruch 8, wobei das Individuum ein Säugling oder ein Kind ist.

10. Verfahren nach Anspruch 8, wobei das Bereitstellen der Ernährung das Bereitstellen eines Snacks ist.

11. Verfahren zum Herstellen einer lagerstabilen, angesäuerten Milch- und/oder milchähnlichen Zusammensetzung, wobei das Verfahren Folgendes umfasst:
Mischen von Pektin und Zucker mit Wasser und/oder mindestens einer Milch; Mischen in Tapioka, modifizierter Maisstärke und Maltodextrin;
Mischen in einem Püree, das ausgewählt ist aus der Gruppe, bestehend aus Frucht, Gemüse und Kombinationen davon;
Mischen in einer Säure;
Mischen in Carrageen, um eine Zusammensetzung zu bilden;
Homogenisieren der Zusammensetzung 17237/3447 kPa;
aseptisches thermisches Aufbereiten der Zusammensetzung bei einer Temperatur im Bereich von 82 °C bis 99 °C;
Kühlen der Zusammensetzung; und
Verpacken der Zusammensetzung;

12. Verfahren nach Anspruch 11, das ferner das Wiegen der Inhaltsstoffe vor dem Mischen in Stärken umfasst.

13. Verfahren nach Anspruch 11, das ferner das Trockenmischen von Pektin und Zucker im Verhältnis 1:1 vor dem Mischen in Stärken umfasst.

14. Verfahren nach Anspruch 11, das ferner das Hinzufügen von Aromen umfasst:
a) vor dem Mischen in der Säure;
b) nach dem Homogenisieren der Zusammensetzung; oder
c) vor dem Mischen in der Säure und nach dem Homogenisieren der Zusammensetzung.

15. Verfahren nach Anspruch 11, das ferner das Hinzufügen von mindestens einem Inhaltsstoff umfasst, der ausgewählt ist aus der Gruppe, bestehend aus einer Kohlenhydratquelle, einer Fettquelle, Rapsöl, Leinsamenöl, einer Omega-3-Fettsäuren-Quelle, einer Proteinquelle, einer Ballaststoffquelle, einem Aroma, einer Farbe, einem Fruchtpüree, einem Gemüsepüree, Vitaminen, Mineralien, DHA, EPA, Antioxidantien, Aminosäuren, Fischöl, Phytochemikalien, Probiotika, Präbiotika, Synbiotika, nicht replizierendem Mikroorganismus, flüssigem Vollkorn und Kombinationen:
a) vor dem Mischen in der Säure;
b) nach dem Homogenisieren der Zusammensetzung; oder
c) vor dem Mischen in der Säure und nach dem Homogenisieren der Zusammensetzung.

## Revendications

1. Composition laitière et/ou de type laitière, acidifiée, de longue durée de conservation comprenant :
un composant laitier et/ou de type laitier ; et
un système de stabilisation comprenant une combinaison d'au moins carraghénane, pectine, maltodextrine, tapioca et amidons de maïs modifiés ;
dans laquelle :
la pectine constitue de 0,2 % à 1,5 % en poids de la composition ;
le carraghénane constitue de 0,2 % à 2,0 % en poids de la composition ;
le tapioca constitue de 1,0 % à 4,0 % en poids de la composition ;
l'amidon de maïs modifié constitue de 1,0 % à 4 % en poids de la composition ; et
la maltodextrine constitue de 1,0 % à 5,0 % en poids de la composition,
dans laquelle la composition comprend un ingrédient de type laitier choisi dans le groupe constitué de lait de noix, lait d'amande, lait de soja, lait de noix de coco, lait de riz, et des combinaisons de ceux-ci.

2. Composition selon la revendication 1, la composition n'étant pas fermentée.

3. Composition selon la revendication 1, dans laquelle l'agent stabilisant augmente une épaisseur de la composition et/ou
dans laquelle l'agent stabilisant fournit du corps à la composition et/ou
dans laquelle l'agent stabilisant améliore la sensation en bouche de la composition.

4. Composition selon la revendication 1, la composition comprenant un ingrédient laitier choisi dans le groupe constitué de lait, crème, yaourt, fromage, crème fraîche, babeurre, kéfir, et des combinaisons de ceux-ci et/ou
la composition comprenant en outre un ingrédient choisi dans le groupe constitué d'une source de glucide, d'une source de matière grasse, d'huile de canola, d'huile de lin, d'une source d'acides gras oméga-3, d'une source de protéine, d'une source de fibre, d'un arôme, d'un colorant, d'une purée de fruits, d'une purée de légumes, de vitamines, de minéraux, de DHA, d'EPA, d'antioxydants, d'acides aminés, d'huile de poisson, de substances phytochimiques, de probiotiques, de prébiotiques, de symbiotiques, d'un micro-organisme non réplicatif, d'une céréale complète liquide, et de combinaisons de ceux-ci et/ou comprenant en outre au moins un prébiotique choisi dans le groupe constitué de gomme d'acacia, d'alpha-glucane, d'arabinogalactanes, de bêta-glucane, de dextranes, de fructo-oligosaccharides, de fucosyllactose, de galactooligosaccharides, de galactomannanes, de gentio-oligosaccharides, de glucooligosaccharides, de gomme de guar, d'inuline, d'isomalto-oligosaccharides, de lactonéotétraose, de lactosaccharose, de lactulose, de lévane, de maltodextrines, d'oligosaccharides de lait, de gomme de guar partiellement hydrolysée, d'oligosaccharides pectiques, d'amidons résistants, d'amidon rétrogradé, de sialooligosaccharides, de sialyllactose, de soja-oligosaccharides, d'alcools de sucre, de xylo-oligosaccharides, de leurs hydrolysats, et de combinaisons de ceux-ci.

5. Composition selon la revendication 1, comprenant en outre au moins une céréale complète liquide.

6. Composition selon la revendication 1, comprenant en outre au moins une purée de fruits,
ou comprenant en outre au moins une purée de légumes,
ou comprenant en outre au moins une purée de fruits et au moins une purée de légumes.

7. Composition selon la revendication 1, ladite composition étant appropriée au développement pour un nourrisson ou un enfant.

8. Procédé pour fournir une nutrition à un sujet comprenant l'administration de la composition choisie dans le groupe constitué de celles revendiquées dans la revendication 1 à la revendication 7.

9. Procédé selon la revendication 8, dans lequel ledit sujet est un nourrisson ou un enfant.

10. Procédé selon la revendication 8, dans lequel la fourniture de nutrition est la fourniture d'un en-cas.

11. Procédé de fabrication d'une composition laitière et/ou de type laitière, acidifiée, de longue durée de conservation, le procédé comprenant :
le mélange de pectine et de sucre avec de l'eau et/ou au moins un lait ;
l'incorporation de tapioca, d'amidon de maïs modifié et de maltodextrine ;
l'incorporation d'une purée choisie dans le groupe constitué de fruits, légumes, et des combinaisons de ceux-ci ;
l'incorporation d'un acide ;
l'incorporation de carraghénane pour former une composition ;
l'homogénéisation de la composition 17 237/3447 kPa ;
le traitement thermique aseptique de la composition à une température allant de 82 °C à 99 °C ;
le refroidissement de la composition ; et
le conditionnement de la composition ;

12. Procédé selon la revendication 11, comprenant en outre le pesage des ingrédients avant incorporation des amidons.

13. Procédé selon la revendication 11, comprenant en outre le mélange à sec de pectine et de sucre dans un rapport 1:1 avant incorporation des amidons.

14. Procédé selon la revendication 11, comprenant en outre l'ajout d'arômes :
a) avant incorporation de l'acide ;
b) après homogénéisation de la composition ; ou
c) avant incorporation de l'acide et après homogénéisation de la composition.

15. Procédé selon la revendication 11, comprenant en outre l'ajout d'au moins un ingrédient choisi dans le groupe constitué d'une source de glucide, d'une source de matière grasse, d'huile de canola, d'huile de lin, d'une source d'acides gras oméga-3, d'une source de protéine, d'une source de fibre, d'un arôme, d'un colorant, d'une purée de fruits, d'une purée de légumes, de vitamines, de minéraux, de DHA, d'EPA, d'antioxydants, d'acides aminés, d'huile de poisson, de substances phytochimiques, de probiotiques, de prébiotiques, de symbiotiques, d'un micro-organisme non réplicatif, d'une céréale complète liquide, et de combinaisons :
a) avant incorporation de l'acide ;
b) après homogénéisation de la composition ; ou
c) avant incorporation de l'acide et après homogénéisation de la composition.
